# EUROPEAN PATENT SPECIFICATION

(11) **EP 2 290 330 B1**
(45) Date of publication and mention of the grant of the patent: **14.11.2012**
(21) Application number: 09382161.9
(22) Date of filing: 28.08.2009
(51) Int. Cl.: G01F 1/08

(54) **A single jet flowmeter with improved driving torque and sensitivity**
Einzelstrahlflüssigkeitsströmungsmesser mit vergrössertem Drehmoment und verbesserter Empfindlichkeit
Compteur de liquide à jet unique à couple moteur et sensitivité ameliorées

(43) Date of publication of application: 02.03.2011
(73) Proprietor: Elster Iberconta, S.A., 28009 Madrid (ES)
(72) Inventor: Egaña Mañanos, Pedro, E-20100, Rentería - Guipúzcoa (ES); Otaegi Irurueta, Xabier, E-20100, Rentería - Guipúzcoa (ES); Fuentes Sesma, David, E-20100, Rentería - Guipúzcoa (ES)
(74) Representative: ABG Patentes, S.L.

(56) References cited:
- EP-A1- 0 718 602
- DE-C1- 10 229 794
- GB-A- 437 637
- US-A- 4 548 084
- US-A- 4 630 488
- US-A- 6 079 281

## Description

### TECHNICAL FIELD OF THE INVENTION

The present invention relates to a single-jet meter for fluids that presents an accurate, precise and stable measurement in a wide range of flow rates within metrological parameters. This flowmeter has a meter chamber wherein a set of hydraulic elements allow the obtention of a measurement range that has metrological parameters with enhanced accuracy and precision within a wide range of flows, and specially in low flows.

### STATE OF THE ART

The present invention relates to single-jet water flowmeters. These flowmeters as in US 6 079 281, GB 437 637 and EP 0 718 602 are based on the rotation of the turbine produced by fluid flow upon entering the measuring chamber in the form of a jet that impacts several of the blades or vanes of a turbine. The counter totaliser records the consumption on the basis of the revolutions completed by the turbine. Thus, the deviation between the ratio established in the totaliser and that which really occurs with each flow rate results in an error in the measurement of the consumed volume.

The metrological characteristics of a single-jet flowmeter are thus determined by their hydraulic design, which is formed by the arrangement of hydraulic elements. These metrological characteristics determine the metrological error curve that measures the deviation of the measured volume from the real volume, due to the non-linear ratio between flow rate and turbine rotation speed. The metrological error curve of the flowmeter records the error incurred in in all flow rates within its measurement range, in such a manner that it reflects the metrological characteristics of the flowmeter. Typical metrological ranges are typically described in standard EN14154.

In the flowmeters known in the state of the art, the metrological error curve only the highest range of flow rates shows small variations (in the order of 1,000 l/h). Therefore, the error can be considered constant and the metrological error curve does not usually deviate excessively from a horizontal straight line, due to which it has little difficulty in keeping within the limits established by the standard. It is known that, in high flow rates, the turbulences produced within the measuring chamber of the flowmeter, maximised by the use of ribs, favour a linear ratio between turbine rotation speed (ω) and flow rate (Q), and therefore the volume of fluid that passes through the flowmeter which is recorded or measured within the metrological ranges. Typically, the error is within the range ±2% within a flow rate interval Q₂≤ Q≤ Q₄ and ±5% within an interval Q₁≤ Q < Q₂. However, when the flow rates drop, the linearising effect of the turbulence gradually disappears as flow rate value drops and the metrological error curve can undergo more significant changes. Said changes can occur with a positive or negative slope when the specific flow rate declines, influenced by the hydraulic design of the flowmeter. Finally, when the flow rates are so low (in the order of 10 l/h or less), the force of the flow has difficulty in overcoming the friction between the different mobile parts of the flowmeter, due to which the turbine suffers losses that negatively affect the linear ratio between turbine rotation and flow rate, and therefore the measured volume rapidly declines, due to which the metrological error curve falls suddenly. The Q₂ values in the state of the art reach up to 10 l/h, those of Q₂ are typically 20 l/h and those of Q₄ vary up to 5,000 l/h.

Additionally, the effects derived from the friction also contribute, jointly with the hydraulic design. As inferred from the simulations carried out by Larraona et al. (ASME J. Fluids Engineering, 2008, Vol. 130, Art. 051102), the effects derived from the friction between the mobile parts of a flowmeter, such as the turbine and measuring chamber thereof, play an increasingly relevant role as the flow rate passing through the flowmeter declines. The results of the simulations allow for the obtention of single-jet flowmeters effects on the metrological characteristics. These effects contribute in low flow rates to the negative curve error for high increases in friction, said eventuality requiring a hydraulic design that will minimise the effects of the friction and supply sufficient energy to overcome said effects.

In particular, within the range of flow rates wherein the linearising effect of the turbulence does not exist, we can conclude that the hydraulic design intervenes decisively in the efficiency wherewith the turbine receives the energy of the fluid, depending on the flow rate, and, therefore, the metrological error curve has a positive or negative slope as a result of the hydraulic design, while the friction appears as drops in the metrological curve.

In this manner the sensitivity of the flowmeter is limited, where sensitivity is understood as its capacity to carry out precise consumption measurements with smaller flow rates, to the point that it is unable to measure with the accuracy required by the metrological ranges of consumptions below a minimum flow rate. This circumstance normally prevents single-jet flowmeters from being able to measure the consumptions originated by the leaks that occur in the facilities of the subscribers. For this reason, the capacity to improve flowmeter sensitivity in order to reduce the error observed in the metrological curve is of great interest.

Together with the accuracy of the recorded volume measurement, the metrological characteristics of single-jet flowmeters are very susceptible to both hydraulic accidents upstream of the flowmeter and small variations that occur in the dimensions and position of the elements that constitute the hydraulic design of the flowmeter. Thus, even when the demanding manufacturing tolerance requirements are fulfilled, the metrological curves of different units with identical flowmeter design may have substancial variations in their metrological characteristics that require enabling a form of regulation to maintain said curve within the limits established by the standard. One contribution is the variation in hydraulic and friction parameters induced by wear of the parts. This wear increases with turbine rotation speed. Additionally, the calcareous deposits that are normally formed on the different elements during use may also modify their dimensions and produce an effect similar to the previous. Therefore, obtaining a hydraulic design that will provide the flowmeter with sufficient metrological stability against small variations that may arise during the mass manufacturing process or during use is of great interest.

Therefore, a single-jet stream fluid flowmeter in an wide flow rate range, 4 l/h to 5,000 l/h, is desirable, wherein the linear ratio between turbine rotation speed and the flow rate, and therefore the number of revolutions completed by the turbine, is proportional to the volume of water that passes through the flowmeter witin the metrological parameters. Said proportional ratio must be stable against small variations in the dimensions of the hydraulic elements, such as external accidents or calcareous deposits or tolerances during manufacture.

### SUMMARY OF THE INVENTION

The object of the invention is to provide a flow meter wherein the arrangement and friction of the hydraulic elements provide great sensitivity in measuring the volume of fluid recorded within an extensive range of flow rates (from 4 l/h to 5,000 l/h), included in particular flow rates smaller than 10 l/h. This sensitivity will allow the flowmeter to determine volume measurement with precision and accuracy within the metrological parameters reflected in a metrological error curve, and to be metrologically stable against both hydraulic accidents upstream of the flowmeter and slight variations in the dimensions and position of the elements that constitute the hydraulic design of the flowmeter. Said flowmeter is defined by independent claim 1. In a second inventive aspect, a process for measuring fluid volume using a flowmeter according to independent claim 10 is provided.

**In a first inventive aspect,** the single-jet stream-type fluid flowmeter is arranged next to a duct where the liquid enters into an original flow direction (X). The flowmeter is comprised of a measuring chamber, a pair of nozzles and a turbine the rotational axis whereof is perpendicular to the original direction of the liquid flow entrance.

The measuring chamber forms an internal enclosure delimited by a first upper wall and a second lower wall, substantially parallel to each other, wherebetween a side wall extends, in such a manner that the enclosure of the camera is substantially cylindrical. Orifices for nozzles are arranged on said side wall. The inner face of the first and second upper and lower wall is substantially perpendicular to the rotational axis of the turbine and has an adapted zone for housing the turbine axis. In this flowmeter, the turbine has 11 blades or vanes.

A set of ribs is arranged on both the first and second wall which project towards the interior of the chamber. These ribs are arranged radially with respect to the rotational axis of the turbine. There are four upper ribs arranged at regular intervals, substantially at an angle of 90°±10° therebetween, in the form of a cross. The upper ribs extend partially through the chamber (between 50% and 90% of its radius) between the point of support of the turbine and the side wall of the chamber. The width of these members varies between 10% and 15% of radius value.

There are six lower ribs arranged radially with respect to the rotational axis of the turbine, at regular intervals, substantially at an angle of 60°±10° therebetween, in the shape of a star. The lower ribs extend substantially throughout the radius towards the supporting element (between 60% and 100% of its radius) between the turbine point of support and the chamber side wall. The width of these lower ribs is similar to that of the upper ribs (from 10% to 15% of radius value). The nerves project substantially from the inner face of each wall, between 20% and 30% of the height of the measuring chamber.Preferably 25%, the ratio between the height of each of the upper ribs that project outwards being approximately between 1.5 and 1.7 times higher than the height of each of the lower ribs.

This difference in rib height allows the turbulence associated to the upper members to be substantially greater. This effect provides the turbine with an additional normal component. Said normal component guarantees the support of the turbine and controls the degree of friction through the bearing. The dependence of the friction force of the normal component on the force during mechanical contact is conditioned by the impulsion of the fluid in said direction due to the effects derived from the turbulences generated by the upper and lower ribs.

Two of the opposing upper nerves are arranged as substantially parallel (±5°) to the first original direction of entrance. In turn, two of the lower opposing ribs are substantially opposed to these two lower upper ribs, and therefore in a direction substantially parallel to the original direction of entrance. Thus, these four ribs define an impelling zone in the space comprised between the two ribs and the side wall wherein the nozzle orifices are arranged. In this impelling zone the fluid penetrates the chamber, impels the turbine vanes or blades and exits the measuring chamber.

The fluid enters this zone through a first nozzle, the axis whereof is substantially deviated from the original direction of liquid flow entrance at an angle between 11° and 20°.

The first nozzle extends along its axis of revolution and initially comprises a truncated cone-shaped cross-section followed by a circular cross-section that has a nozzle radius comprised between 8% and 14% of the radius value of the measuring chamber. The distance between the intersection of the axis of the first nozzle and the axis of X up to the centre of the chamber is between 90% and 100% of the radius of the measuring chamber.

The axis of the second nozzle froms a second angle with the original direction of entrance between 5° and 15°.

The second nozzle extends along its axis of revolution with a circular cross-section that has a nozzle radius comprised between 10% and 14% of the value of the radius of the measuring chamber. The distance between the intersection of the axis of the second nozzle and the axis of X up to the centre of the chamber is between 60% and 75% of the radius of the measuring chamber.

When the jet of the first nozzle impacts the eleven-blade turbine on the impelling zone that has the upper and lower ribs, the turbulences have a net torque effect on the vane. Said net torque makes turbine rotation more efficient throughout the flow rate range, improving turbine support on the rotation bearing with low flow rates. This increases flowmeter stability against the disturbances upstream of the measuring chamber with low operating flow rates and reducing turbine pitch with high flow rates.

The turbine, arrangement and dimensions of the hydraulic elements that comprise the upper and lower ribs of the chamber, the first and second nozzles and turbine vanes, determine the metrological characteristics of the flowmeter on determining turbine dynamics. The impulsion of the fluid is counteracted by the friction and therefore, these elements leverage the flow energy of the fluid circulating through the flowmeter, also with low flow rates, and impel the turbine in such a manner as to overcome the linear friction caused by the mechanical elements throughout the metrological range, especially in the case of low flow rates where friction phenomena are greater.

Likewise, said elements are susceptible to dimensional changes due to variations in the manufacturing processes or to geometric variations due to use in the facility; said changes occasionally produce variations in the metrological efficiency of the flowmeter, causing measurement irregularities. Thanks to the sensitivity provided by the different main elements, and to the high flow profile disturbance level, produced by the difference in height between the upper and lower ribs, the disturbances created within the measuring chamber annul the variations in the flow formed upstream and downstream of the device, resulting in the high stability of the flow profile on entering the counter, exceeding in any case the requirements expressed by the different standards relative to these devices (EN141154), avoiding the need to use flow stabilisers in all cases, both upstream and downstream.

**In a second inventive aspect**, a measurement process is provided for measuring with the accuracy and stability required by the metrological parameters comprised in the arrangement of a flowmeter that comprises the following stages:
(a) coupling a counting element onto a flowmeter according to the first inventive aspect;
(b) coupling the latter flowmeter onto an inlet duct and onto an outlet duct in the second nozzle;
   and record the measurement taken by the counting element.

### DESCRIPTION OF THE DRAWINGS

For the purpose of better understanding the invention, its objects and advantages, the following figures have been attached to the specification, wherein the following is represented:
fig. 1 shows a cross-section of an embodiment of a flowmeter with its measuring elements, cameras, nozzles and turbine;
fig. 2 shows a bottom plan view of an embodiment of the flowmeter;
fig. 3 shows a bottom plan view of an embodiment of the flowmeter;

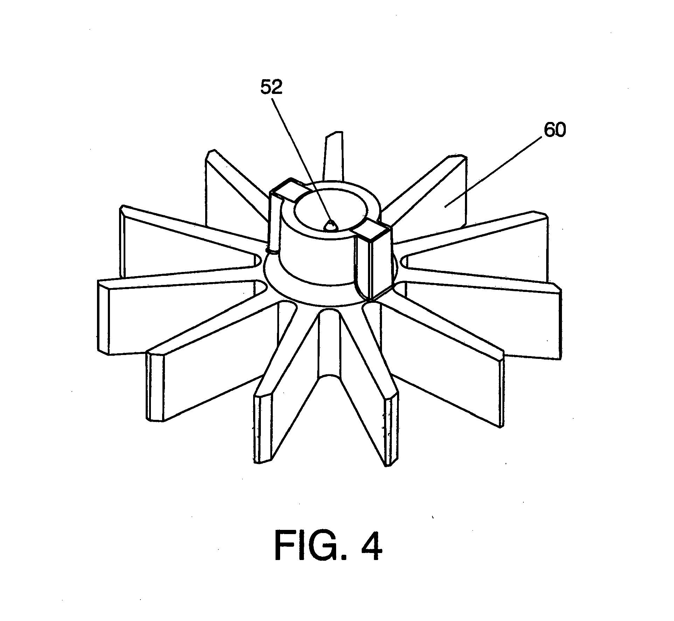

fig. 4 shows a plan view of an embodiment of the flowmeter;
fig. 5 shows the metrological curves of a flowmeter without the characteristics of the invention and how these are incorporated in an embodiment example;
fig. 6 shows the variation in the metrological characteristics of a flowmeter;
fig. 7 shows the variation in the metrological characteristics of a flowmeter;
fig. 8 shows the variation in the rotation speed of a flowmeter;
fig. 9 shows the variation in the metrological characteristics of a flowmeter;
fig. 10 shows the variation in the metrological characteristics of a flowmeter; and fig. 11 shows one of the metrological characteristics of a flowmeter according to a preferred example of embodiment with low flow rates.

### EMBODIMENTS OF THE INVENTION

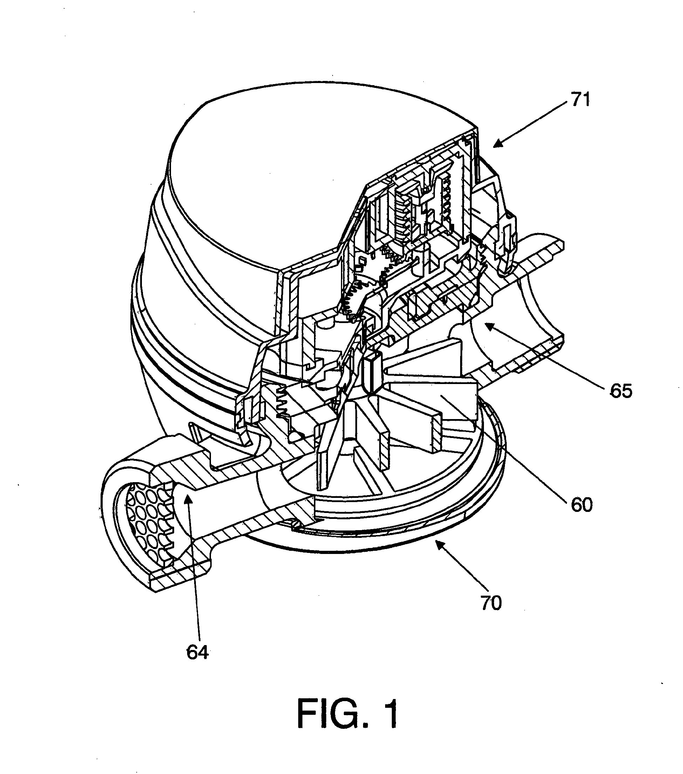

A preferred embodiment of the invention is described below. Figure 1 shows a general view of a cross-section of flowmeter (70). Said flowmeter has a turbine (60) in a measuring chamber (63). The fluid penetrates chamber (63) through a first nozzle (64) and exits it through a second nozzle (65). A counting mechanism (71) joined to turbine (60) by means of a transmission element can be observed. Preferably, said transmission is carried out using a group of magnets that are entirely comprised within the meter chamber (63).

Measuring chamber (63) has a substantially cylindrical shape. Preferably, the radius of this chamber ranges from 26 mm to 28 mm; more preferably, 27.5 mm. The height of this chamber ranges from 20 mm to 23 mm; more preferably, 21.35 mm.

The eleven-blade turbine (60) preferably has an outer diameter ranging from 51 mm to 53 mm and, more preferably, 52 mm. The inner diameter of the turbine (60) varies between 15 mm to 17 mm and, more preferably, is 16 mm. The height of the turbine (60) varies between 8 mm and 10 mm and, more preferably, is 9 mm. The turbine (60) vanes are arranged at intervals, as the angle between the turbine (60) blades varies between 31 ° and 34° and, more preferably, is 32.7°.

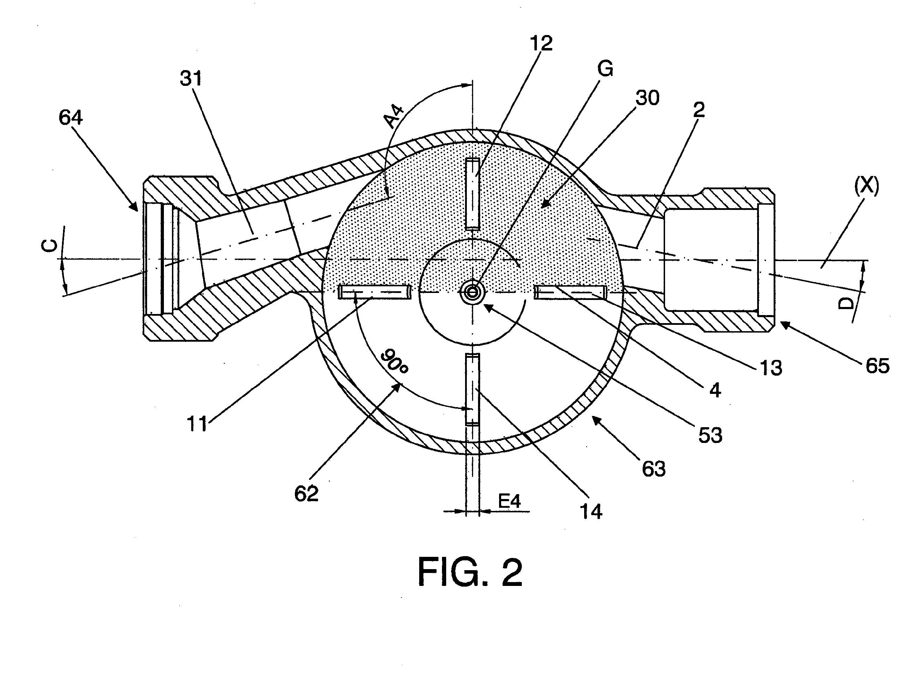

Figure 2 shows a bottom plan view of the measuring chamber (63) and the first and second nozzles (64, 65) of the flowmeter (70).

Preferably, the radius of the circular cross-section of the first nozzle ranges from 4.5 mm to 6 mm and, more preferably, is 5.25 mm.

The truncated cone ratio is preferably 1:10 at the entrance to the first nozzle (64).

The axis (1) of the first nozzle (64) forms an angle (C) with the original direction of fluid entrance (X). Preferably, this angle (C) varies between 10° and 20° and, more preferably, is 17°.

At present, the distance between the intersection of the axis of the first nozzle (64) with the axis of X up to the centre of the chamber is approximately 52 mm.

The axis (2) of the second nozzle (65) forms an angle (D) with the original direction of fluid entrance (X). Preferably, the angle of (D) ranges from 5° to 15° and, more preferably, is 11°.

The second nozzle preferably has a circular cross-section of radius ranging from 6 mm to 7.5 mm, with 6.75 mm being the preferred value. The distance between the intersection of the axis of the second nozzle with the axis of X and the centre of the chamber is preferably approximately 39 mm.

As can be observed, a first upper wall (62) in chamber (63) comprises four upper ribs (11, 12, 13, 14) arranged in the form of a cross. Preferably, the angle between these ribs is 90°±5°. More preferably it is 90°. Two of these upper ribs (11, 13) are opposed and arranged parallel to axis (X), in such a manner that they form an angle (A4) between the axis (1) of the first nozzle (64) and rib (12) is comprised in the range of 98° to 128° and, preferably, is 108°. Also an impulsion zone (30) between the upper (11) and lower (13) ribs can be observed.

Preferably, the ratio between the height of the upper ribs (11-14) and the lower ribs (41-46) is 1:64.

The dimensions of the upper ribs (11, 12, 13, 14) have a length of 13 mm to 18 mm; more preferably, 13 mm. Preferably, the width ranges from 2 mm to 3 mm; more preferably, 2.5 mm. These members project to a height of between 5 mm and 6 mm; more preferably, 5.75 mm.

On the first upper wall (62) a wall (53) zone can be observed around rotational axis (G), adapted so as to come into contact with turbine (60).

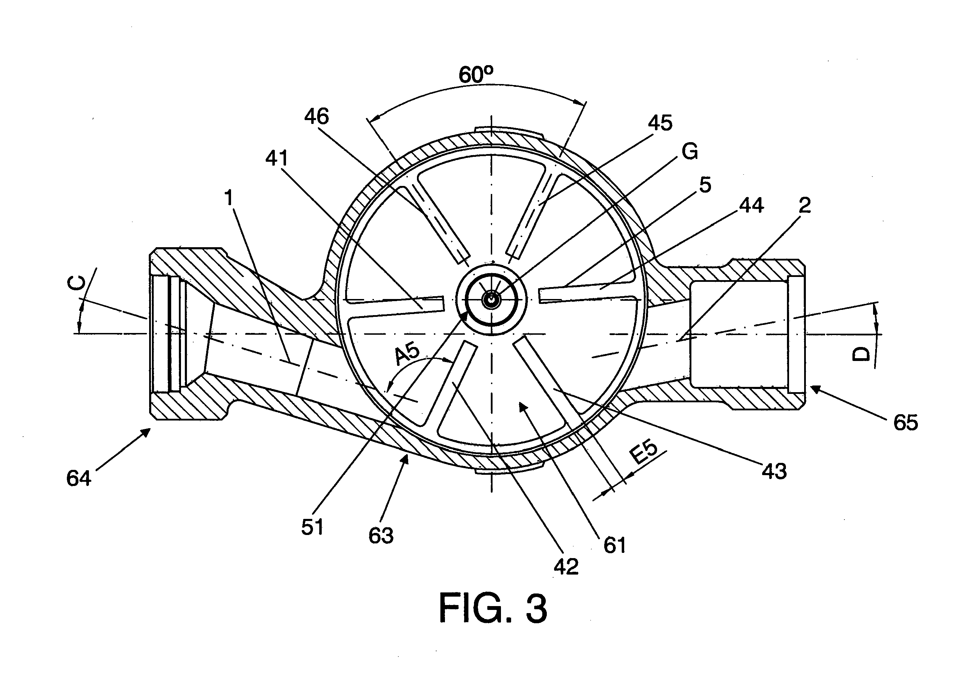

Figure 3 shows a plan view of the measuring chamber (63) and of the first and second nozzles (64, 65) of the flowmeter (70).

As can be observed, a second lower wall (62) in chamber (63) comprises six lower ribs (41, 42, 43, 44, 45, 46) arranged in the form of a star.

Preferably, the angle between these nerves is 60°±5°; more preferably, 60°.

Two opposing members (41, 44) are arranged parallel to the original direction of fluid entrance (X) and opposed to the upper ribs (1l, 13). Preferably, the upper rib (42) and the lower rib (52) form an angle of 30°±5°; more preferably, 30°.

Preferably, the angle (A5) between the rib (42) is 98°±10°. More preferably, this angle is 98°+1°.

These lower ribs (41-46) preferably have a length ranging from 16 mm to 20 mm; more preferably, 17 mm. Preferably, the width of these lower ribs ranges from 2 mm to 3 mm; more preferably, 2.5 mm. Preferably, these members project at a height of 3 mm to 4 mm; more preferably, 3.5 mm.

In the first lower wall (61) a wall (51) zone can be observed around the rotational axis (G) adapted so as to come into contact with the turbine (60). This zone has a rotation bearing adapted so as to come into contact with the lower end (52) of turbine (60), which ends in a spherical cap. Preferably, turbine (60) is arranged in measuring chamber (63) with its rotational axis on an adapted wall (51) zone, which is a rotation bearing and is perpendicular to the direction of flow. Preferably, the ratio is 3.5:1 between the radii of the sphere of the rotation bearing of the turbine and the sphere of the upper end (52) of the axis around which said bearing rotates.

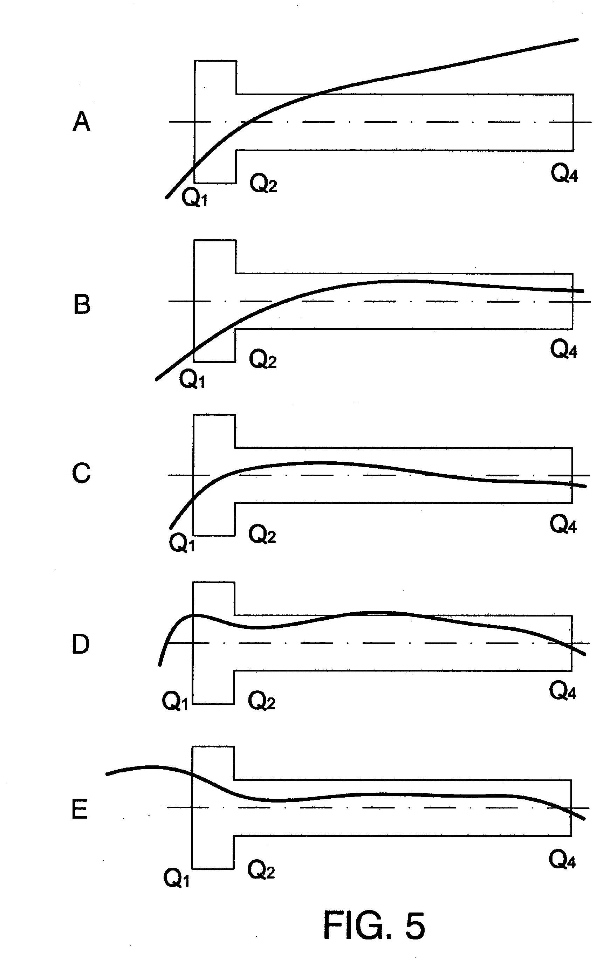

In figure 5 is represented the perpetrated relative error in % with respect to the logarithm of the flow rate circulating through the flowmeter and the metrological curve described in standard EN14154. Figure 5A shows the metrological error curve corresponding to a flowmeter according to Table 1. The dependence of the error committed with the flow rate displays a non-linear behaviour that positions it above the tolerated metrological levels.

| **Table 1** | |
|---|---|
| **turbine (60)** | |
| number of vanes; | 5 |
| angle between vanes (°) | 360/5 |

| **measuring chamber (61)** | |
|---|---|
| chamber radius (mm) | 27.5 |
| chamber height (mm) | 21.35 |

| lower chamber/turbine contact zone: | |
|---|---|
| Ratio: | 2:1 |
| Radius of lower spherical turbine cap (52) vs | |
| Radius of the spherical chamber zone rotation | |
| bearing (51) | |

| **Upper ribs** | |
|---|---|
| # of upper ribs (4); | 4 |
| ribs (11-13) parallel to the X direction | 2 |
| height (mm) | 5.75 |
| Width (mm) | 2.5 |
| length (mm) | 13 |
| Angle A4 (°) : | 90 |

| **Lower ribs** | |
|---|---|
| # lower ribs | 4 |
| ribs (41-44) parallel to the X direction | 2 |
| height (mm) | 3.5 |
| width (mm) | 2.5 |
| length (mm) | 17 |
| Angle A5 (°) : | 80 |

| **First nozzle (64)** | |
|---|---|
| Angle C (°) | 15 |
| nozzle (64) axis (2) length (mm) | 6 |
| circular nozzle (64) radius (mm) | 9.5 |

| **Second nozzle (65)** | |
|---|---|
| Angle D (°) | |
| nozzle axis (65) length (mm) | 7.5 |
| circular nozzle (65) radius (mm) | 13.5 |

| **Table 2** | |
|---|---|
| **turbine (60)** | |
| number of vanes; | 11 |
| angle between vanes (°) | 360/11 |

| **measuring chamber (61)** | |
|---|---|
| chamber radius (mm) | 27.5 |
| chamber height (mm) | 21.35 |

| **Lower chamber/turbine contact zone:** | |
|---|---|
| Ratio: | 3.5:1 |
| Spherical radius of the spherical turbine rotation | |
| bearing (52) vs Spherical radius of the chamber | |
| rotational axis (51) | |

| **Upper ribs** | |
|---|---|
| # of upper ribs (4); | 4 |
| ribs (11-13) parallel to the X direction | 2 |
| height (mm) | 5.75 |
| width(mm) | 2.5 |
| length (mm) | 13 |
| Angle A4 (°) : | 108 |

| **Upper ribs** | |
|---|---|
| # lower ribs | 6 |
| ribs (41-44) parallel to the X direction | 2 |
| height (mm) | 3.5 |
| width (mm) | 2.5 |
| length (mm) | 17 |
| Angle A5 | 98±1° |

| **First nozzle (64)** | |
|---|---|
| Angle C (°) | 18 |
| nozzle (64) axis (2) length (mm) | 19 |
| circular nozzle (64) radius (mm) | 5.25 |

| **Second nozzle (65)** | |
|---|---|
| Angle D (°) | 11 |
| nozzle axis (65) length (mm) | 13 |
| circular nozzle (65) radius (mm) | 6.75 |

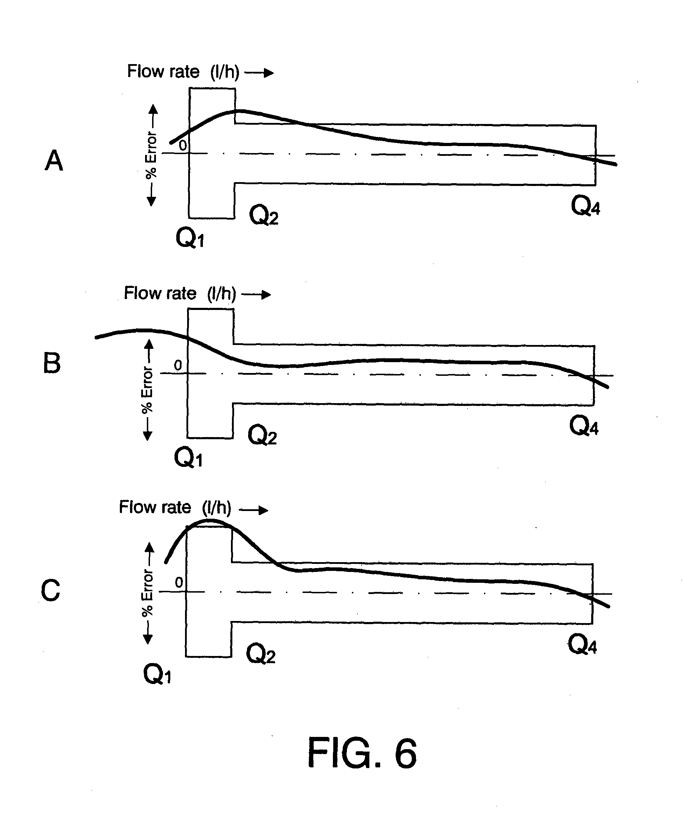

In figure 6 is shown the variation in the metrological characteristics of a flowmeter that has the characteristics of Table 2, on changing the height ratio between the upper (11-14) and lower (41-46) ribs: (A) 4.75:3.5, (B) 5.75:3.5, (C) 6.50:3.50.

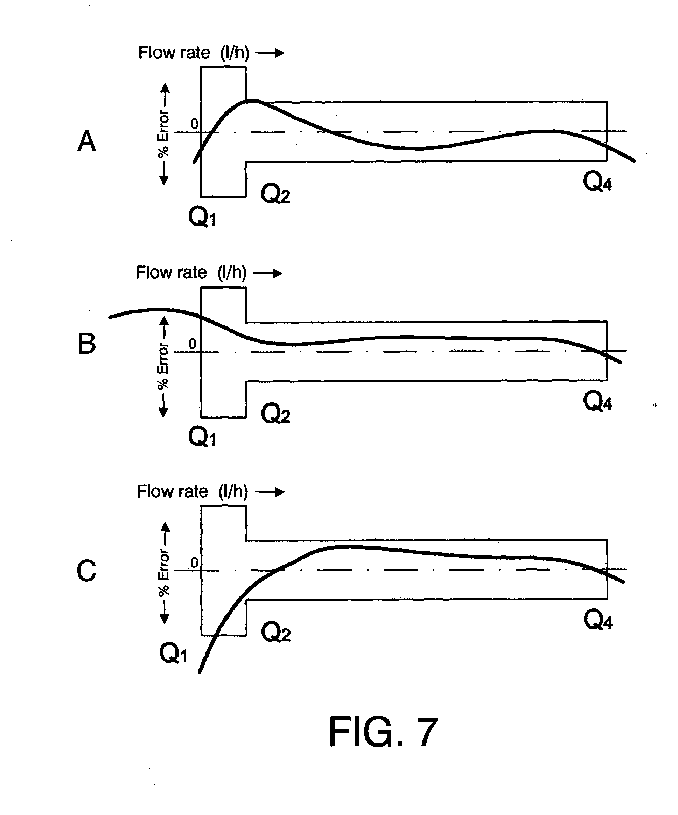

In figure 7 is shown the variation in the metrological characteristics of a flowmeter that has the characteristics of Table 2, on changing the number of lower ribs between four ribs (A), six ribs (B) and eight ribs (C).

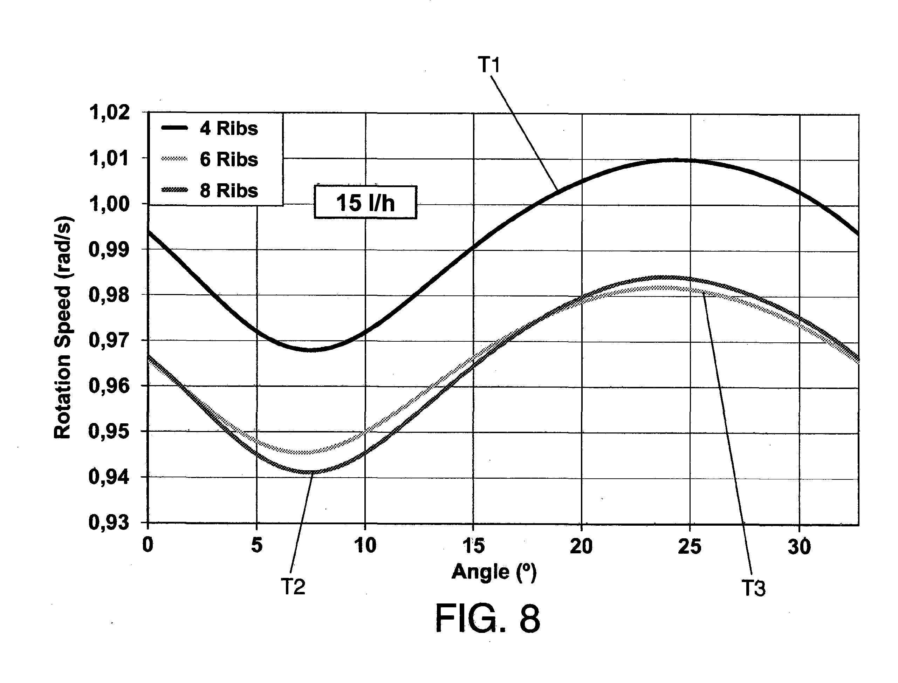

In Figure 8 is shown how turbine rotation speed varies according to the rotation angle thereof for a flowmeter that has four ribs (curve T1), six ribs (curve T2) and eight ribs (curve T3).

The stability of the flowmeter according to Table 2 makes that the dependence of the metrological error variation with friction torque is bounded.

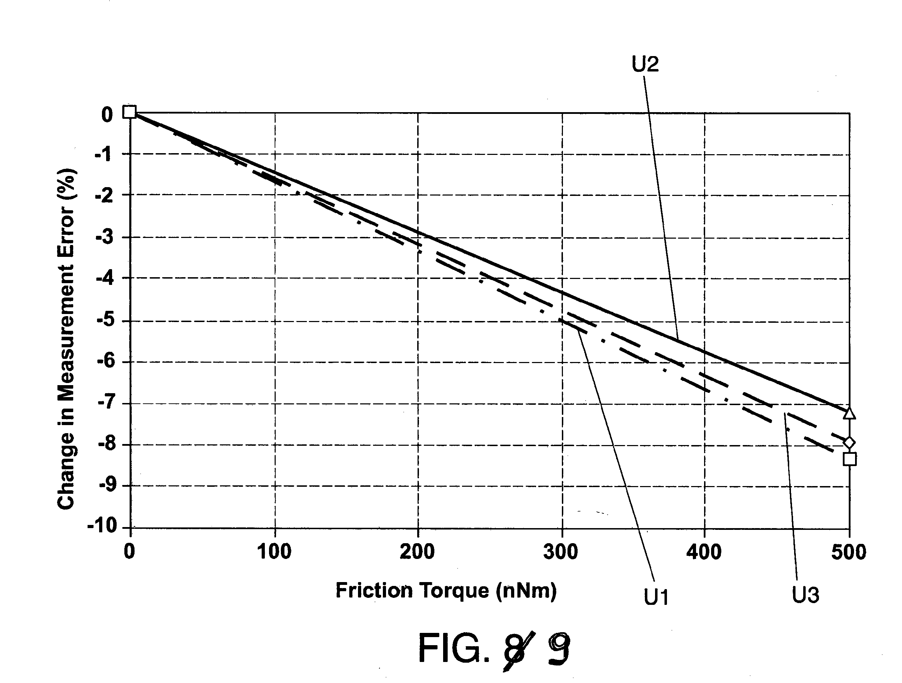

For a flow rate of 15 l/h, this error is less than 10% in the range of 0 to 500 nNm of friction torque. This dependence causes error slope variation with the torque to be lower than 0.5 for an interval of 30° around the value of (A4) of a flowmeter that has the technical characteristics of Table 2. In Figure 9 is shown the variation in the metrological error with the friction torque for an angle (A4) of 93° (curve U1), 108° (curve U2) and 123° (curve U3) for a flow rate of 15 l/h.

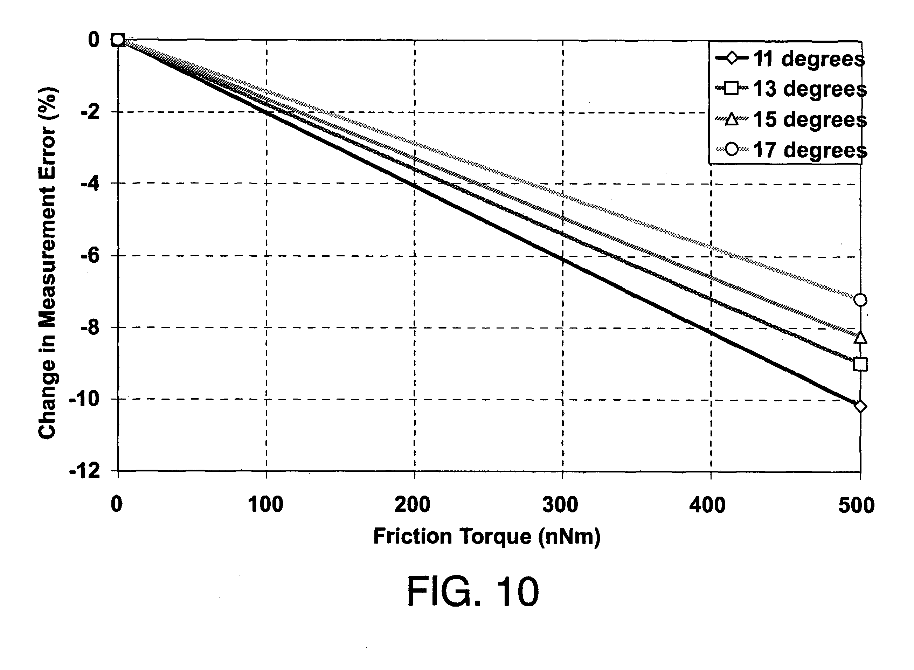

According to Table 2, flowmeter stability limits the dependence of metrological error with the friction torque. For a flow rate of 15 l/h, this error is less than 10% in the range of 0 to 500 nNm of the friction torque. This dependence causes error slope variation with the torque to vary between 1.4 and 2.0 for an interval of 11° to 17° as the angle (C) of the nozzle axis (64) with the original direction (X) of a flowmeter that has the technical characteristics of Table 2. In figure 10 is shown, for a flow rate of 15 l/h, the variation in the metrological error with the friction torque for an angle (C) of 11°, 13°, 15° and 17°.

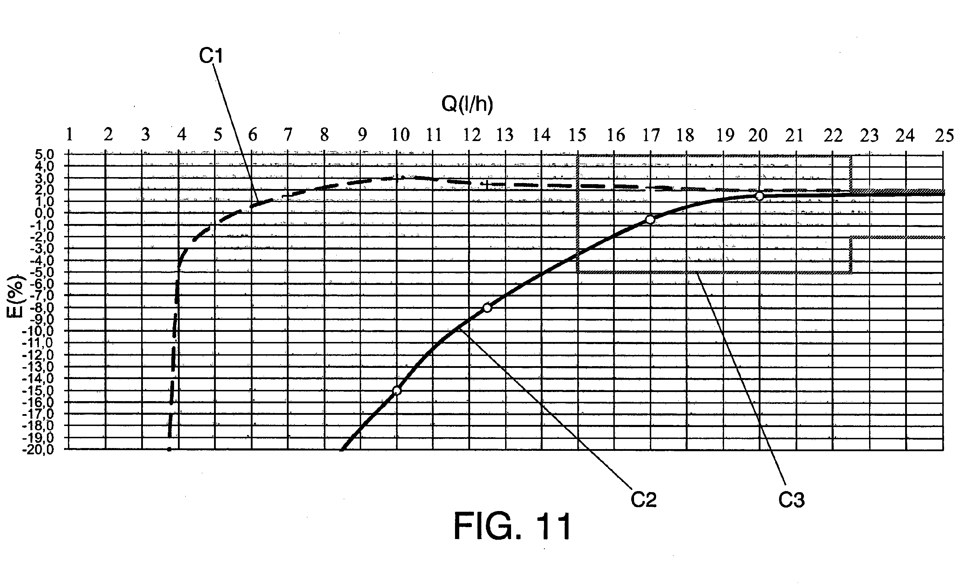

In figure 11 is shown the metrological error curve for a flowmeter that has the characteristics of Table 2 with an error within the range of ±5% for flow rates greater than 4 l/h.

An accurate and stable measurement method for fluids that comprises the following stages is also provided:
coupling a flowmeter that has the characteristics of Table 2 onto a counting element (71);
coupling the aboveementioned flowmeter (71) onto an inlet duct in the first nozzle (64) an an outlet duct in the second nozzle (65); and
   recording the count made by the counting element (71).
Preferably, the flowmeter is coupled to the measuring element (71) by means of magnetic transmission, using two magnets of opposing polarity.

## Claims

1. Single-jet flow meter (70) that comprises:
a turbine (60) with eleven vanes which are spaced at regular intervals, that has a rotational axis (G) perpendicular to an original direction of fluid flow entrance (X);
a first nozzle (64);
a second nozzle (65); and
a meter measuring chamber (63) that comprises:
a first upper wall (62) that comprises four upper ribs (11-14) and a wall zone (53) around the rotational axis (G), adapted so as to come into contact with the turbine (60);
a second lower wall (61) that comprises six lower ribs (41-46) and a wall zone (51) around the rotational axis (G), adapted so as to come into contact with the turbine (60); and
a side wall of the measuring chamber (63) that comprises orifices for coupling with the first nozzle (64) and the second nozzle (65);
wherein:
the four upper ribs (11-14) are radially arranged with respect to the rotational axis (G) of the turbine (60), at regular intervals of 90°±10° therebetween, said upper ribs (11-14) extending radially between the 50% and 90% of the radius of the measuring chamber (63), the width of these ribs being between 10% and 15% of the value of the radius of the measuring chamber (63), the height of the upper ribs (11-14) being between 1.5 and 1.7 times the height of the lower ribs (41-46);
the six lower ribs (41-46) are radially arranged with respect to the rotational axis (G) of the turbine (60), at regular intervals of 60°±10° therebetween, said lower ribs (41-46) extending radially between 60% and 100% of the radius of the measuring chamber (63), wherein the width of these ribs is between 10% and 15% of the value of the radius of the measuring chamber (63), the height of the lower ribs (41-46) being comprised between 20% and 30% of the height of the measuring chamber (63); and
the upper ribs (11-14) are arranged with respect to the lower ribs (41-46) in such a manner that:
the centre of the four upper ribs (11-14) and the six lower ribs (41-46) is aligned with the rotational axis (G) of the turbine (60),
with two opposing upper ribs (11, 13) and two opposing lower ribs (41, 44) in a direction approximately parallel to the original direction of the fluid flow entrance (X),
the axis (1) of the first nozzle (64) forming an angle (C) with the axis (1) of the inlet nozzle (64) with respect to the original direction of fluid flow entrance (X) comprised between 10° and 20°.

2. Flowmeter, according to claim 1, wherein the radius of the measuring chamber (63) of the flowmeter is approximately 27.5 mm and the height is approximately 21.35 mm.

3. Flowmeter, according to any of the preceding claims, wherein the height of the ribs is approximately 1.64 times that of the height of the lower ribs.

4. Flowmeter, according to any of the preceding claims, wherein the height of the upper ribs is approximately 5.75 mm.

5. Flowmeter, according to any of the preceding claims, wherein the angle (A4) between the first nozzle (64) and the second upper rib (12) is approximately 108°.

6. Flowmeter, according to any of the preceding claims, wherein the ratio between the sphere of the turbine rotation bearing and the sphere of the upper end (52) of the axis around which said bearing rotates is 3.5:1.

7. Flowmeter, according to any of the preceding claims, wherein the upper ribs (11-14) extend between 50% and 80% of the value of the radius of the measuring chamber around the midpoint between the side wall and rotational axis (G) of the turbine (60).

8. Flowmeter, according to any of the preceding claims, wherein the angle (C) between the axis (1) of the first nozzle (64) and the direction (X) varies between 15° and 18°.

9. Flowmeter, according to claim 1, wherein:
the radius of the measuring chamber (63) is approximately 27.5 mm and the height of the measuring chamber (63) is approximately 21.35 mm;
the upper ribs (11-14) are radially arranged, their intersection coinciding with the rotational axis (G) of the turbine (60) at regular angular intervals of approximately 90°,
each of the upper ribs (11-14) being of a length of approximately 13 mm, a width (E4) of approximately 2.5 mm and a height in the range of 5.7 mm and 5.8 mm.;
the lower ribs (41-46) are radially arranged, their intersection coinciding with the rotational axis (G) of the turbine (60) at regular angular intervals of approximately 60°,
each of the lower ribs (41-46) being of a length of approximately 17 mm, a width (E5) of approximately 2.5 mm and a height of approximately 3.5 mm;
being arranged
with an upper rib (42) and a lower rib (52), forming an angle of approximately 30°,
forming an angle (A4) between the axis of the first nozzle (64) of approximately 108°;
and the turbine (60) with an angle between the eleven vanes of the turbine (60) of approximately 32.7°, the radius of the turbine (60) being approximately 27 mm.

10. Procedure for measuring volume that comprises the following stages:
a. coupling a counting element (71) onto a flowmeter according to claims 1 to 9;
b. coupling the aforementioned flowmeter onto an inlet duct in the first nozzle (64) and an outlet duct in the second nozzle (65); and
c. recording the measurement taken by the counting element (71).

## Patentansprüche

1. Einzelstrahlflussmessgerät (70), das aufweist:
eine Turbine (60) mit elf Schaufeln, die in gleichmäßigen Abständen beabstandet sind, welche eine Drehachse (G) senkrecht zu einer ursprünglichen Richtung eines Fluidflusseintritts (X) hat,
eine erste Düse (64),
eine zweite Düse (65), und
eine Messgerätmesskammer (63), die umfasst:
eine erste obere Wand (62), die vier obere Rippen (11 - 14) und einen Wandbereich (53) um die Drehachse (G) umfasst,
der ausgelegt ist, um in Kontakt mit der Turbine (60) zu gelangen,
eine zweite untere Wand (61), die sechs untere Rippen (41 - 46) umfasst und einen Wandbereich (51) um die Drehachse (G), der ausgelegt ist, um in Kontakt mit der Turbine (60) zu gelangen, und
eine Seitenwand der Messkammer (63), die Öffnungen zum Koppeln mit der ersten Düse (64) und der zweiten Düse (65) umfasst,
wobei
die vier oberen Rippen (11 - 14) radial bezüglich der Drehachse (G) der Turbine (60) angeordnet sind, bei gleichmäßigen Abständen von 90° ± 10° dazwischen, wobei die oberen Rippen (11 - 14) sich radial zwischen 50 % und 90 % des Radius der Messkammer (63) erstrecken, wobei die Breite dieser Rippen zwischen 10 % und 15 % des Werts des Radius der Messkammer (63) liegt, wobei die Höhe der oberen Rippen (11 - 14) zwischen 1,5 und 1,7 mal der Höhe der unteren Rippen (41 - 46) ist,
die sechs unteren Rippen (41 - 46) radial bezüglich der Drehachse (G) der Turbine (60) angeordnet sind, bei gleichmäßigen Abständen von 60° ± 10° dazwischen, wobei die unteren Rippen (41 - 46) sich radial zwischen 60 % und 100 % des Radius der Messkammer (63) erstrecken, wobei die Breite dieser Rippen zwischen 10 % und 15 % des Werts des Radius der Messkammer (63) ist, wobei die Höhe der unteren Rippen (41 - 46) zwischen 20 % und 30 % der Höhe der Messkammer (63) umfasst ist, und
die oberen Rippen (11 - 14) bezüglich der unteren Rippen (41 - 46) auf eine solche Weise angeordnet sind, dass:
die Mitte der vier Rippen (11 bis 14) und der sechs unteren Rippen (41 bis 46) zu der Drehachse (G) der Turbine (60) ausgerichtet ist, wobei
zwei gegenüberliegende obere Rippen (11, 13) und zwei gegenüberliegende untere Rippen (41, 44) in einer Richtung näherungsweise parallel zu der ursprünglichen Richtung des Fluidflusseintritts (X) sind,
die Achse (1) der ersten Düse (64) einen Winkel (C) mit der Achse (1) der Einlassdüse (64) bezüglich der ursprünglichen Richtung des Fluidflusseintritts (X) bilden, umfasst zwischen 10° und 20°.

2. Flussmessgerät nach Anspruch 1, bei dem der Radius der Messkammer (63) des Flussmessgeräts näherungsweise 27,5 mm und die Höhe näherungsweise 21,35 mm beträgt.

3. Flussmessgerät nach einem der vorstehenden Ansprüche, bei dem die Höhe der Rippen näherungsweise 1,64 mal der Höhe der unteren Rippen ist.

4. Flussmessgerät nach einem der vorstehenden Ansprüche, bei dem die Höhe der oberen Rippen näherungsweise 5,75 mm beträgt.

5. Flussmessgerät nach einem der vorstehenden Ansprüche, bei dem der Winkel (A4) zwischen der ersten Düse (64) und der zweiten oberen Rippe (12) näherungsweise 108° beträgt.

6. Flussmessgerät nach einem der vorstehenden Ansprüche, bei dem das Verhältnis zwischen dem Kreis der Turbinendrehlagerung und dem Kreis des oberen Endes (52) der Achse, um die Lagerung dreht, 3,5 : 1 ist.

7. Flussmessgerät nach einem der vorstehenden Ansprüche, bei dem die oberen Rippen (11 - 14) sich zwischen 50 % und 80 % des Werts des Radius der Messkammer um den Mittelpunkt zwischen der Seitenwand und der Drehachse (G) der Turbine (60) erstrecken.

8. Flussmessgerät nach einem der vorstehenden Ansprüche, bei dem der Winkel (C) der Achse (1) der ersten Düse (64) und der Richtung (X) zwischen 15° und 18° variiert.

9. Flussmessgerät nach Anspruch 1, bei dem:
der Radius der Messkammer (63) näherungsweise 27,5 mm und
die Höhe der Messkammer (63) näherungsweise 21, 35 mm beträgt,
die oberen Rippen (11 - 14) radial angeordnet sind, wobei deren Schnittpunkt mit der Drehachse (G) der Turbine (60) bei regelmäßigen Winkelabständen von näherungsweise 90° übereinstimmt,
jede der oberen Rippen (11 - 14) eine Länge von näherungsweise 13 mm, eine Breite (E4) von näherungsweise 2,5 mm und eine Höhe in dem Bereich von 5,7 mm und 5,8 mm hat,
die unteren Rippen (41 - 46) radial angeordnet sind, wobei deren Schnittpunkt mit der Drehachse (G) der Turbine (60) bei regelmäßigen Winkelabständen von näherungsweise 60° übereinstimmt,
jede der unteren Rippen (41 - 46) eine Länge von näherungsweise 17 mm, eine Breite (E5) von näherungsweise 2,5 mm und eine Höhe von näherungsweise 3,5 mm hat,
wobei das Flussmessgerät angeordnet ist
mit einer oberen Rippe (42) und einer unteren Rippe (52),
die einen Winkel von näherungsweise 30° bilden,
einen Winkel (A4) zwischen der Achse der ersten Düse (64) und der zweiten oberen Rippe (12) von näherungsweise 108° bildend,
und die Turbine (60) einen Winkel zwischen den elf Schaufeln der Turbine (60) von näherungsweise 32,7° hat, der Radius der Turbine (60) näherungsweise 27 mm ist.

10. Verfahren zum Messen eines Volumens, das folgende Schritte umfasst:
a. Koppeln eines Zählelements (71) auf einem Flussmessgerät nach einem der Ansprüche 1 bis 9,
b. Koppeln des vorstehend benannten Flussmessgeräts auf einer Einlassführung in der ersten Düse (64) und einer Auslassführung in der zweiten Düse (65) und
c. Aufzeichnen der Messung, die von dem Zählelement (71) vorgenommen wird.

## Revendications

1. Débitmètre à jet unique (70) comprenant :
- une turbine (60) avec onze pales placées à intervalles réguliers, qui a un axe de rotation (G) perpendiculaire à une direction originelle d'entrée du flux de fluide (X),
- un premier embout (64),
- un deuxième embout (65), et
- une chambre de mesure du débit (63) comportant :
- une première paroi supérieure (62) qui comprend quatre nervures supérieures (11-14) et une zone de la paroi (53) autour de l'axe de rotation (G) adaptée à entrer en contact avec la turbine (60),
- une deuxième paroi inférieure (61) qui comprend six nervures inférieures (41-46) et une zone de la paroi (51) autour de l'axe de rotation (G) adaptée à entrer en contact avec la turbine (60), et
- une paroi latérale de la chambre de mesure (63) qui comporte des orifices pour le couplage avec le premier embout (64) et le deuxième embout (65), où :
- les quatre nervures supérieures (11-14) sont disposées radialement par rapport à l'axe de rotation (G) de la turbine (60), à des intervalles réguliers de 90°±10° les unes des autres, les dites nervures supérieures (11-14) s'étendant radialement entre les 50% et les 90% du rayon de la chambre de mesure (63), la largeur de ces nervures étant comprise entre 10% et 15% de la valeur du rayon de la chambre de mesure (63), la hauteur des nervures supérieures (11-14) étant comprise entre 1,5 et 1,7 fois la hauteur des nervures inférieures (41-46),
- les six nervures inférieures (41-46) sont placées radialement par rapport à l'axe de rotation (G) de la turbine (60) à des intervalles réguliers de 60°±10° les unes des autres, les dites nervures inférieures (41-46) s'étendant radialement entre 60% et 100% du rayon de la chambre de mesure (63), où la largeur de ces nervures est comprise entre 10% et 15% de la valeur du rayon de la chambre de mesure (63), la hauteur des nervures inférieures (41-46) étant comprise entre 20% et 30% de la hauteur de la chambre de mesure (63), et
- les nervures supérieures (11-14) sont placées, par rapport aux nervures inférieures (41-46) de telle manière que :
- le centre des quatre nervures supérieures (11-14) et des six nervures inférieures (41-46) est aligné avec l'axe de rotation (G) de la turbine (60),
- avec deux nervures supérieures opposées (11, 13) et deux nervures inférieures opposées (41, 44) dans une direction approximativement parallèle à la direction originelle d'entrée du flux de fluide (X),
- l'axe (1) du premier embout (64) formant un angle (C) avec l'axe (1) de l'embout d'entrée (64) par rapport à la direction originelle d'entrée du flux de fluide (X) comprise entre 10° et 20°.

2. Débitmètre selon la revendication 1, **caractérisé en ce que** le rayon de la chambre de mesure (63) du débitmètre est d'environ 27,5mm et sa hauteur est d'environ 21,35 mm.

3. Débitmètre selon l'une quelconque des revendications précédentes, **caractérisé en ce que** la hauteur des nervures est d'environ 1,64 fois celle de la hauteur des nervures inférieures.

4. Débitmètre, selon l'une quelconque des revendications précédentes, **caractérisé en ce que** la hauteur des nervures supérieures est d'environ 5,75 mm.

5. Débitmètre selon l'une quelconque des revendications précédentes, **caractérisé en ce que** l'angle (A4) entre le premier embout (64) et la deuxième nervure supérieure (12) est d'environ 108°.

6. Débitmètre, selon l'une quelconque des revendications précédentes, **caractérisé en ce que** le rapport entre la sphère du support de rotation de la turbine et la sphère de l'extrémité supérieure (52) de l'axe autour duquel le dit support est en rotation est de 3,5/1.

7. Débitmètre, selon l'une quelconque des revendications précédentes, **caractérisé en ce que** les nervures supérieures (11-14) s'étendent entre 50% et 80% de la valeur du rayon de la chambre de mesure autour du point médian entre la paroi latérale et l'axe de rotation (G) de la turbine (60).

8. Débitmètre selon l'une quelconque des revendications précédentes, **caractérisé en ce que** l'angle (C) entre l'axe (1) du premier embout (64) et la direction (X) varie entre 15° et 18°.

9. Débitmètre, selon la revendication 1, **caractérisé en ce que** :
- le rayon de la chambre de mesure (63) est d'environ 27,5 mm et la hauteur de la chambre de mesure (63) est d'environ 21,35 mm,
- les nervures supérieures (11-14) sont disposées radialement, leur intersection coïncidant avec l'axe de rotation (G) de la turbine (60) à des intervalles angulaires réguliers d'environ 90°,
- chacune des nervures supérieures (11-14) étant d'une longueur d'environ 13 mm, une largeur (E4) d'environ 2,5 mm et d'une hauteur comprise entre 5,7 mm et 5,8 mm,
- les nervures inférieures (41-46) sont disposées radialement, leur intersection coïncidant avec l'axe de rotation (G) de la turbine (60) à des intervalles angulaires réguliers d'environ 60°,
- chacune des nervures inférieures (41-46) étant d'une longueur d'environ 17 mm, une largeur (E5) d'environ 2,5 mm et d'une hauteur d'environ 3,5 mm, le dispositif étant prévu :
- avec une nervure supérieure (42) et une nervure inférieure (52) formant un angle d'environ 30°,
- formant un angle (A4) entre l'axe du premier embout (64) et la deuxième nervure supérieure d'environ 108°,
- et la turbine (60) avec un angle entre les onze pales de la turbine (60) d'environ 32,7°, le rayon de la turbine (60) étant d'environ 27 mm.

10. Procédure de mesure du volume qui comprend les étapes suivantes :
a. coupler un élément de comptage (71) sur un débitmètre selon les revendications 1 à 9,
b. coupler le débitmètre mentionné ci-dessus sur un tuyau d'entrée dans le premier embout (64) et un tuyau de sortie dans le deuxième embout (65), et
c. enregistrer les mesures prises par l'élément de comptage (71).
